Europäisches Patentamt

European Patent Office

Office européen des brevets

(11) Veröffentlichungsnummer: **0 059 170**
**A1**

## (12) EUROPÄISCHE PATENTANMELDUNG

(21) Anmeldenummer: **82810081.8**

(22) Anmeldetag: **22.02.82**

(51) Int. Cl.³: **G 05 B 19/40, G 05 B 19/407**

(30) Priorität: **24.02.81 CH 1207/81**

(43) Veröffentlichungstag der Anmeldung: **01.09.82**
**Patentblatt 82/35**

(84) Benannte Vertragsstaaten: **AT BE CH DE FR GB IT LI NL SE**

(71) Anmelder: **Bystronic Maschinen AG, Industriestrasse 3, CH-4922 Bützberg (CH)**

(72) Erfinder: **Plüss, Thomas, Einschlagstrasse, CH-4858 Wynau (CH)**

(74) Vertreter: **Steiner, Martin et al, c/o AMMANN PATENTANWAELTE AG BERN Schwarztorstrasse 31, CH-3001 Bern (CH)**

(54) **Verfahren und Vorrichtung zur Steuerung der Bewegung eines Einrichtungsteils.**

(57) Zur Steuerung eines Einrichtungsteils längs einer Bahn wird diese Bahn in Enzelstrecken aufgeteilt, welche durch Kombination von Bewegungskomponenten in mindestens zwei Achsrichtungen gerade durchlaufen werden. Die aus Speichern entnommenen Streckenkomponenten ($\Delta x$, $\Delta y$) werden je einem zugeordneten Frequenzumsetzer (2x, 2y) zugeführt, der eine Taktfrequenz (Fein) in eine Fortschaltfrequenz (Fx, Fy) umsetzt, welche der zugeordneten Streckenkomponente ($\Delta x$, $\Delta y$) proportional ist. Die Fortschaltung in jeder Achsrichtung erfolgt daher mit einer der Streckenkomponente proportionalen Schrittfrequenz, bzw. Geschwindigkeit. Damit wird es möglich, die Bahn mit variabler Geschwindigkeit zu durchlaufen, wobei Bahnabschnitte starker Krümmung langsamer durchlaufen werden als Bahnabschnitte schwacher Krümmung. Die Elektronik ist besonders einfach und erlaubt eine vielseitige Programmierung durch freie Wahl der Streckenkomponenten ($\Delta x$, $\Delta y$).

EP 0 059 170 A1

- 1 -

VERFAHREN UND VORRICHTUNG ZUR STEUERUNG DER BEWEGUNG EINES EINRICHTUNGSTEILS

Die vorliegende Erfindung betrifft ein Verfahren und eine Vorrichtung zur Steuerung der Bewegung eines Einrichtungsteils, insbesondere eines Werkzeugträgers, wobei als Werkzeug im weitesten Sinne ein bearbeitendes, zeichnendes oder sonstwie wirkendes Gerät vorhanden sein kann.

Aus der DE-OS 1 803 265 sind ein Verfahren und eine Vorrichtung bekannt, bei welchen die Bewegung längs einer beliebig gekrümmten Bahn durch Verstellen des Einrichtungsteils in mindestens zwei Achsrichtungen durch Verstellen jeweils streckenweise um für jede Achsrichtung programmierte Schrittzahlen gesteuert wird. Den einzelnen Achsrichtungen sind Frequenzumsetzer zugeordnet, welche eine gemeinsame Eingangsfrequenz um Teilverhältnisse heruntersetzen, die jeweils der Zahl auszuführender Schritte pro Strecke und Richtung entsprechen. Dieses Vorgehen setzt eine direkte gegenseitige Abhängigkeit der Teilverhältnisse und eine jeweilige Anpassung der Eingangsfrequenz auf ein Mehrfaches der kleinsten Schrittzahl voraus. Das lässt sich bei zwei Achsrichtungen zur Steuerung einer ebenen Bewegung noch realisieren, wenn auch keine ideale Steuerung mehr möglich ist, indem die pro Strecke auszuführenden Schritte nicht für jede Richtung in der gleichen Zeit ausgeführt werden. Dass dieser Vorrichtung klar Grenzen gesetzt sind, ergibt sich u.a. daraus, dass die Verhältnisse zwischen den Schrittzahlen und den Fortschaltfrequenzen nicht mehr frei wählbar sind und daher eine zusätzliche Steuerung der Eingangsfrequenz mittels Rechner erforderlich wird, wenn die Bewegung überall mit gleicher Geschwindigkeit oder aber mit nach bestimmten Regeln variabler Geschwindigkeit erfolgen soll. Sind z.B. in einer bestimmten Richtung keine Schritte auszuführen, ist eine besondere Regelung erforderlich. Man ist also auch nicht unabhängig von der Lage des jeweiligen Bewegungsvektors in der Ebene oder im Raum.

Die USA-PS 3 720 814 betrifft eine numerische Steuerung für Werkzeugmaschinen, bei welcher einer Grobsteuerung eine Feinsteuerung überlagert ist. Dieser Steuerungsart führt zu einer sehr aufwendigen Lösung.

Ziel der vorliegenden Erfindung ist es, eine Steuerung der oben an erster Stelle genannten Art zu vereinfachen und zugleich viel allgemeiner und freier programmierbar zu machen. Die Lösung erfolgt gemäss Anspruch 1. Dieses Vorgehen erlaubt es, die Schrittzahlen für jede, vor allem auch für eine beliebige Zahl von Bewegungskomponenten völlig frei und unabhängig von den Schrittzahlen anderer Komponenten für jede Strecke zu programmieren. Unabhängig von der Schrittzahl wird die Bewegung in jeder Richtung oder Komponente in derselben Zeit ausgeführt, wobei die Schritte mindestens annähernd gleichmässig über diese Zeit verteilt sind. Man ist dabei auch völlig frei, durch Wahl der Schrittzahlen innerhalb dieser Zeit die Bewegungsgeschwindigkeit für jede einzelne Komponente frei vorzuwählen bis zu der maximalen Komponentenlänge $S_m$. Unbekümmert um die Lage des Bewegungsvektors kann durch passende Programmierung der Schrittzahlen die gewünschte Geschwindigkeit für jede Strecke frei vorgewählt werden. Es sind daher auch keine Rechner für eine Geschwindigkeitssteuerung erforderlich, obwohl die Anwendung solcher natürlich auch nicht ausgeschlossen ist. Durch entsprechende Programmierung der Schrittzahlen kann die Bewegungsgeschwindigkeit auch frei variiert werden, wobei insbesondere Bahnteile starker Krümmung oder Ecken langsamer durchlaufen werden können als Bahnteile schwacher Krümmung.

Die Erfindung wird nun anhand zweier Ausführungsbeispiele näher erläutert.

Figur 1 zeigt schematisch den Schaltungsteil zur Vorwahl der Bahnstrecken des ersten Ausführungsbeispiels,

Figur 2 zeigt einen Abschnitt aus einer zu durchlaufenden Bahn, aufgeteilt in einzelne Bahnstrecken und

Figuren 3 und 4 illustrieren das zweite Ausführungsbeispiel.

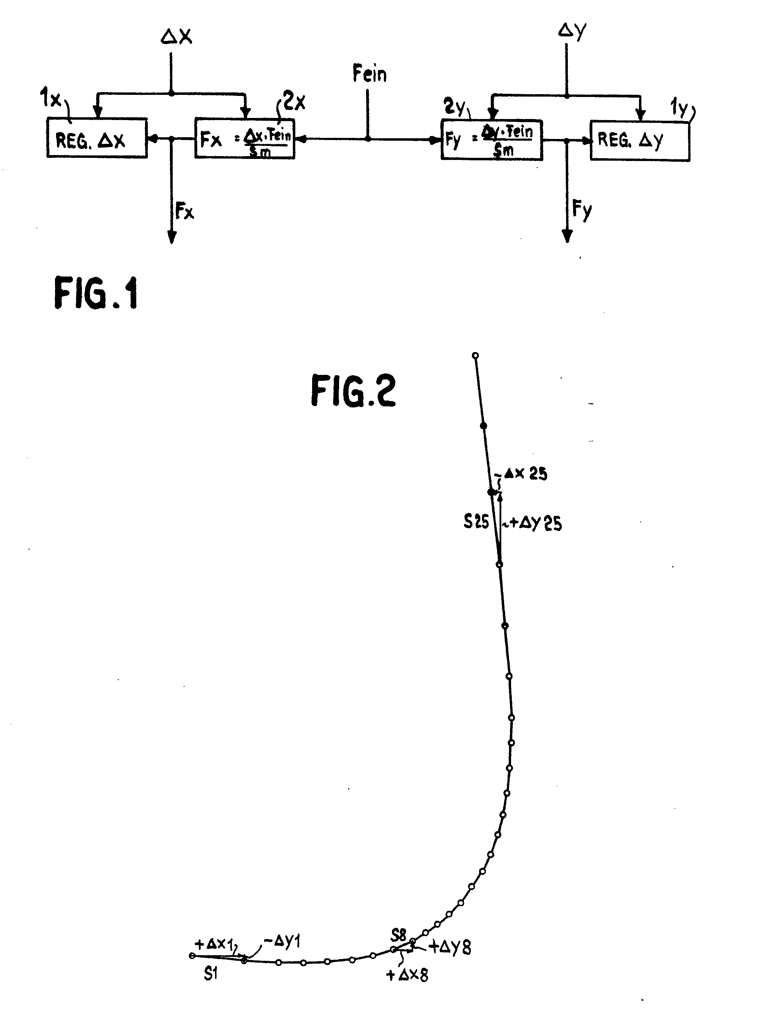

Die in Figur 1 schematisch dargestellte Vorrichtung weist an sich bekannte, nicht dargestellte Speicher auf, aus welchen paarweise Streckenkomponenten bezeichnende Schrittzahlen $\Delta x$ und $\Delta y$ entnommen werden können. Wie Figur 2 zeigt, ist die zu durchlaufende Bahn in einzelne Strecken aufgeteilt, welche je in eine Komponente $\Delta x$ und eine Komponente $\Delta y$ zerlegt sind. Diese Komponenten bzw. Schrittzahlen $\Delta x$ und $\Delta y$ werden aus den Speichern jeweils je einem Fahrwegregister 1x bzw. 1y zugeführt. Sie werden auch je einem Frequenzumsetzer 2x bzw. 2y zugeführt. Diese Frequenzumsetzer empfangen an ihrem Eingang eine Eingangsfrequenz oder Taktfrequenz Fein. Gemäss den in den Frequenzumsetzern 2 angegebenen Formeln wird diese Eingangsfrequenz je in eine Fortschaltfrequenz Fx bzw. Fy umgewandelt, und zwar nach den Formeln

0059170

$$Fx = \frac{\Delta x \cdot Fein}{Sm}$$

$$Fy = \frac{\Delta y \cdot Fein}{Sm}$$

worin Sm die maximale Komponentenlänge bedeutet.

Die Ausgangsfrequenzen Fx und Fy gelangen an nicht dargestellte Schrittschaltmotoren welche einen nicht dargestellten Einrichtungsteil auf einem Kreuzschlitten in den beiden Koordinaten-Richtungen schrittweise verstellen. Die Frequenzumsetzer 2x und 2y sind so ausgebildet, dass die Ausgangsimpulse zeitlich gleichmässig verteilt auftreten, derart, dass in jeder Koordinatenrichtung oder Achsenrichtung eine gleichmässige Fortschaltung des Einrichtungsteils bzw. Werkzeugs oder Gerätes stattfindet. Die Ausgangsimpulse der Frequenzumsetzer 2x und 2y gelangen an Rückzähleingänge der Register 1x und 1y. Sind diese Register auf Null zurückgezählt, beginnt eine neue Periode in der neue Komponenten bzw. Impulszahlen $\Delta$ x und $\Delta$ y eingelesen werden. Die Frequenzumsetzer 2x und 2y arbeiten nun mit einem neuen Umsetzungsverhältnis, welches der Streckenkomponente Sx bzw. Sy proportional ist, sodass sich entsprechend proportionale Fortschaltgeschwindigkeiten für die Komponenten x und y ergeben.

Wie Figur 2 zeigt, sind nun die Strecken zwischen benachbarten Bahnstützpunkten verschieden lang gewählt und zwar sind diese Strecken im Bereiche relativ starker Krümmung der zu durchlaufenden Bahn, also rechts unten in Figur 2 relativ kurz, während sie in Abschnitten schwacher Krümmung, insbesondere rechts oben in Figur 2 verhältnismässig lang sind. Diese annähernd geraden Strecken können mit hoher Geschwindigkeit durchfahren werden, da weder in Richtung x noch in Richtung y bedeutende Geschwindigkeitsänderungen auftreten. Der stark gekrümmte Abschnitt rechts unten wird dagegen relativ langsam durchlaufen, so dass genügend Zeit zur Steuerung der verhältnismässig starken Richtungsänderungen des Einrichtungsteils bzw. Werkzeugs zur Verfügung steht. Wie Figur 2 ferner zeigt, werden die Strecken schon vor dem Einsetzen der stärksten Krümmung verkürzt, um die Geschwindigkeit allmählich herabzusetzen.

Die Aufnahme der Streckenkomponenten für die einzelnen Strecken bzw. die Aufteilung der Bahn in einzelne Strecken kann entweder rechnerisch erfolgen, indem die Bahn aufgezeichnet und gemäss Figur 2 eingeteilt und ausgemessen wird, oder aber, die Aufnahme kann automatisch erfolgen, indem ein Leser der aufgezeichneten Kurve folgt und die Aufteilung in geeignete Strecken automatisch vornimmt und die Streckenkomponenten berechnet und in den Speicher eingibt.

Die beschriebene Steuervorrichtung kann überall dort eingesetzt werden wo ein Werkzeug oder Gerät praktisch beliebig schnell, jedenfalls aber mit beliebigen Geschwindigkeiten innerhalb eines Bereiches arbeiten kann. Das trifft beispielsweise zu für Geräte zum Aufzeichnen einer Bahn oder Kurve, für Diamantwerkzeuge zum Anreissen von Glasplatten und dergleichen. Bei der dargestellten Ausführungsform besteht die Möglichkeit, auch die Eingangsfrequenz Fein zu verändern, um damit die Schrittfrequenzen und die erreichbaren Höchstgeschwindigkeiten zu wählen. Ein und dieselbe Elektronik kann somit für verschiedene Anlagen verwendet werden, welche je nach ihrer Ausbildung mit höherer oder geringerer Geschwindigkeit gesteuert werden müssen.

Bei dem in Fig. 1 dargestellten Ausführungsbeispiel sind der Einfachheit halber zwei Achsenrichtungen x und y angenommen. Es können jedoch beliebig viele Richtungen oder Komponenten genau gleich gesteuert werden, indem pro Komponente die erforderlichen Speicherplätze für die

0059170

Streckenkomponenten und ein Frequenzumsetzer 2 vorgesehen sind.

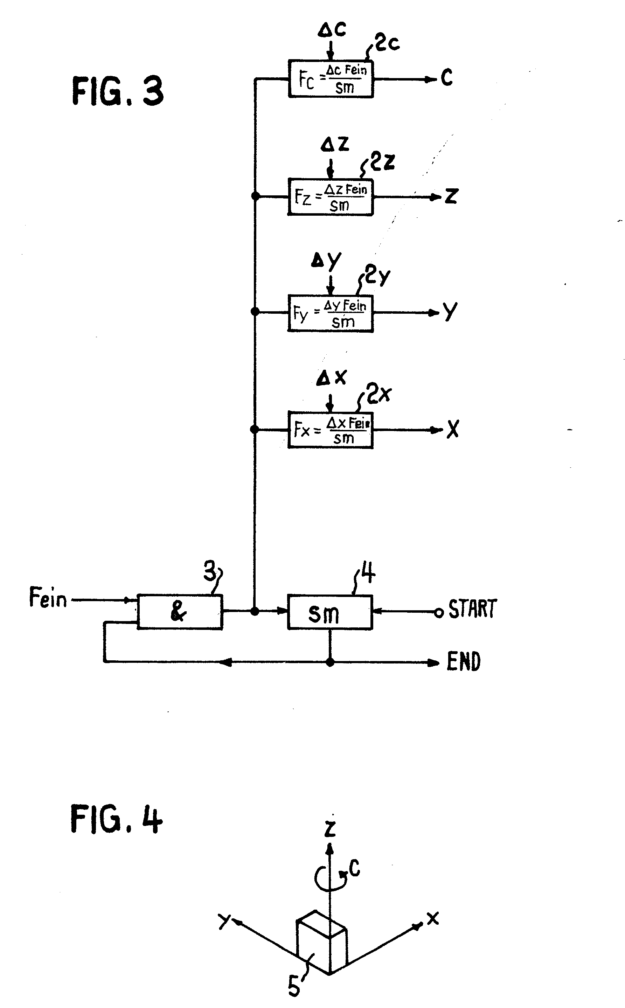

Ein Ausführungsbeispiel dieser Art, bei welchem die Fahrwegregister 1x und 1y wegfallen können, ist in Fig. 3 dargestellt. Die Eingangsfrequenz Fein gelangt an den einen Eingang einer UND-Schaltung 3 deren anderer Eingang mit einem END-Ausgang eines Zählers 4 verbunden ist. Der Ausgang der UND-Schaltung 3 ist einerseits mit dem Zähleingang des Zählers 4 und andererseits mit den Eingängen von vier Frequenzumsetzern 2x, 2y, 2z und 2c verbunden. Diesen Umsetzern können die Schrittzahlinformationen $\Delta x, \Delta y, \Delta z$ und $\Delta c$ zugeführt werden und sie liefern Schrittschaltimpulse an Schrittmotoren zur Verstellung eines Teils 5 in den Koordinatenrichtungen x, y und z bzw. zur Drehbewegung c um die z-Achse gemäss Fig. 4.

Zu Beginn jeder Strecken- bzw. Winkel-Steuerperiode setzt ein Startsignal START den Zähler 4 auf die der maximalen Komponentenlänge Sm entsprechende Stellung. Der END-Ausgang des Zählers nimmt hierbei einen logischen Zustand an, für welchen die Impulse der Frequenz Fein durch die UND-Schaltung 3 an den Eingang des Zählers 4 gelangen und dessen Rückzählung einleiten. Zugleich gelangen die Impulse der Frequenz F ein an die Eingänge der Umsetzer 2, welche gemäss den eingegebenen Inkrementen $\Delta x$, $\Delta y$, $\Delta z$ und $\Delta c$ Impulse in einer diesen Inkrementen proportionalen Frequenz bzw. Zahl an die Schrittmotoren weiterleiten und damit die Bewegung des Teils 5 steuern. Ist der Zähler 4 auf Null zurückgestellt, ändert der logische Zustand an seinem END-Ausgang, womit der Zug von Impulsen durch die UND-Schaltung unterbrochen wird. Kurz darauf erscheint ein neues START-Signal am Zähler 4, welches durch das vom Zählerausgang ausgegebenen END-Signal ausgelöst wird, und es erfolgt die Steuerung für die nächste Strecke bzw. den nächsten Drehwinkel in der oben beschriebenen Weise. Die Fahrwegregister sind hierbei unnötig, denn für jede Strecke bzw. jeden Winkelabschnitt wird ein Zug von Impulsen festgelegter Zahl bei bestimmter Frequenz F ein an die Umsetzer 2 übermittelt, und diese leiten die nötigen Impulse an die Schrittmotoren weiter. Damit ist dafür gesorgt, dass die Dauer jeder Steuerperiode bzw. des Durchlaufens jeder Strecke gleich bleibt und die Durchlaufgeschwindigkeit wählbar ist bis zum Erreichen der maximalen Komponentenlänge Sm.

Zusätzlich kann aber auch noch die Frequenz F ein und / oder der jeweilige Maximalstand, auf welchen der Zähler 4 gebracht wird, verändert werden, um die Dauer der Steuerperioden und die Zahl der Impulse pro Steuerperiode zu ändern.

0059170

- 8 -

<u>Patentansprüche</u>:

1. Verfahren zur Steuerung der Bewegung eines Einrichtungsteils längs einer beliebig gekrümmten Bahn durch Verstellen des Einrichtungsteils in mindestens zwei Achsrichtungen, wobei die Verstellung jeweils streckenweise um für jede Achsrichtung programmierte Schrittzahlen gesteuert wird,
dadurch gekennzeichnet,
dass die Steuerung für jede Strecke (S) mit Schrittzahlen ($\Delta$x, $\Delta$y) und Schrittfrequenzen (Fx, Fy) durch Umsetzen einer Eingangsfrequenz (F ein) nach der Formel

$$Fx = \frac{F\,ein\,.\,\Delta x}{Sm} \qquad (I)$$

worin Sm eine maximale Komponentenlänge bedeutet, erfolgt.

2. Verfahren nach Anspruch 1,
dadurch gekennzeichnet,
dass für die Steuerung pro Strecke (S) eine bestimmte Impulszahl bei Eingangsfrequenz (F ein) nach der Formel I für jede Koordinate umgesetzt wird.

3. Verfahren nach Anspruch 1 oder 2,
   dadurch gekennzeichnet,
   dass durch Wahl der programmierten Schrittzahlen für
   jede Strecke (S) die Geschwindigkeit mit welcher die
   Strecke durchlaufen wird der Bahnkrümmung angepasst,
   z.B. bei starker Bahnkrümmung herabgesetzt wird.

4. Verfahren nach Anspruch 3,
   dadurch gekennzeichnet,
   dass vor stark gekrümmten Bahnabschnitten eine allmähliche Verkürzung der Strecken erfolgt.

5. Verfahren nach irgendeinem der Ansprüche 1 bis 4,
   dadurch gekennzeichnet,
   dass die Eingangsfrequenz (F ein) nach vorgegebenem
   Programm oder in Funktion eines Rechenergebnisses gemäss den Gegebenheiten der jeweils zu durchlaufenden
   Strecke verändert wird.

6. Vorrichtung zur Durchführung des Verfahrens nach Anspruch 1 mit Mitteln zur Eingabe von Schrittzahlen
   für jede Achsrichtung bzw. Bewegungskomponente für
   jede zu durchlaufende Strecke bzw. auszuführenden Bewegungsabschnitt, und mit Frequenzumsetzern zur Umsetzung einer Eingangsfrequenz in Schrittfrequenzen
   für Schrittmotoren,
   dadurch gekennzeichnet,
   dass jeder Frequenzumsetzer (2x, 2y) zur Umsetzung
   der Eingangsfrequenz (F ein) nach der obenstehenden
   Formel I beschaffen ist.

7. Vorrichtung nach Anspruch 6,
   gekennzeichnet durch
   eine Torschaltung (3) und einen Zähler (4), welche
   zur periodischen Abgabe je eines Impulszuges vorbestimmten Impulszahl bei Eingangsfrequenz (F ein)
   geschaltet sind, wobei der Impulszug allen Frequenzumsetzern (2x, 2y) zugleich zugeführt wird.

8. Vorrichtung nach Anspruch 6 oder 7,
   dadurch gekennzeichnet,
   dass die Steuerung jedes Umsetzers (2x, 2y) unabhängig von allen anderen programmierbar ist.

9. Vorrichtung nach irgendeinem der Ansprüche 6 bis 8,
   dadurch gekennzeichnet,
   dass ein Generator für die Eingangsfrequenz (F ein)
   von Hand, gemäss Programm oder durch einen Rechner in
   Funktion von Gegebenheiten der jeweils durchlaufenen
   Strecke in seiner Frequenz veränderbar ist.

$\Delta X$

$\Delta Y$

Fein

1x

REG. $\Delta X$

2x

$Fx = \dfrac{\Delta x \cdot \text{Fein}}{Sm}$

2y

$Fy = \dfrac{\Delta y \cdot \text{Fein}}{Sm}$

1y

REG. $\Delta Y$

Fx

Fy

**FIG.1**

**FIG.2**

$-\Delta x\, 25$

$S25$  $+\Delta y\, 25$

$+\Delta x\, 1$   $-\Delta y\, 1$

$S8$   $+\Delta y\, 8$

$S1$

$+\Delta x\, 8$

**FIG. 3**

$\Delta c$   2c

$F_C = \dfrac{\Delta c \ Fein}{Sm}$ → C

$\Delta z$   2z

$F_Z = \dfrac{\Delta z \ Fein}{Sm}$ → Z

$\Delta y$   2y

$F_y = \dfrac{\Delta y \ Fein}{Sm}$ → Y

$\Delta x$   2x

$F_x = \dfrac{\Delta x \ Fein}{Sm}$ → X

Fein → | 3 & | → | 4 Sm | ← START

END

**FIG. 4**

z

C

Y      X

5

# 0059170

Nummer der Anmeldung

**Europäisches Patentamt**

## EUROPÄISCHER RECHERCHENBERICHT

EP 82 81 0081

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| X | DE-A-1 803 265  (TAUCHMANN)  * Insgesamt * | 1,2,5, 6,8,9 | G 05 B  19/40 G 05 B  19/40⁷ |
| A | US-A-3 720 814  (J. KLEIN; THE WARNER & SWASEY CO.) *  Spalte 3, Zeile 29 - Spalte 4, Zeile 30; Spalte 9, Zeilen 5-17 * | 3,4 | |

**RECHERCHIERTE SACHGEBIETE (Int. Cl. ³)**

G 05 B

Der vorliegende Recherchenbericht wurde für alle Patentansprüche erstellt.

| Recherchenort | Abschlußdatum der Recherche | Prüfer |
|---|---|---|
| DEN HAAG | 27-05-1982 | CORNILLIE O.A.R. |